# EUROPÄISCHE PATENTSCHRIFT

(11) **EP 2 373 525 B1**
(45) Veröffentlichungstag und Bekanntmachung des Hinweises auf die Patenterteilung: **27.07.2016**
(21) Anmeldenummer: 09763861.3
(22) Anmeldetag: 26.11.2009
(51) Int. Cl.: B60R 21/264

(54) **GASGENERATOR**
GAS GENERATOR
GÉNÉRATEUR DE GAZ

(30) Priorität: 03.12.2008 DE 102008060305
(43) Veröffentlichungstag der Anmeldung: 12.10.2011
(73) Patentinhaber: TRW Airbag Systems GmbH, 84544 Aschau am Inn (DE)
(72) Erfinder: BIERWIRTH, Sebastian, 83562 Rechtmehring (DE); CRISTOFORETTI, Fabien, 28100 Dreux (FR); SPITZENBERGER, Dieter, 84559 Kraiburg (DE)
(74) Vertreter: Mehnert, Bernhard
(86) Internationale Anmeldenummer: PCT/EP2009/008422
(87) Internationale Veröffentlichungsnummer: WO 2010/063404

(56) Entgegenhaltungen:
- EP-A- 1 205 363
- EP-A- 1 293 394
- EP-A- 1 354 774
- EP-A- 1 491 282
- EP-A- 1 669 258
- JP-A- 4 345 555
- US-A1- 2007 001 439

## Beschreibung

Die Erfindung betrifft einen mehrstufigen Gasgenerator, insbesondere für ein Fahrzeuginsassenrückhaltesystem in Kraftfahrzeugen.

Aus dem Stand der Technik sind mehrstufige Gasgeneratoren mit einem Außengehäuse bekannt, welches im Wesentlichen zwei Gehäuseschalen aufweist, die miteinander verbunden sind und einen Innenraum definieren, der u. a. eine Hauptbrennkammer bildet. In der Hauptbrennkammer sind mehrere hülsenförmige Bauteile vorgesehen, die als abgetrennte Zusatzbrennkammern ausgebildet sein können. Durch die Vielzahl von Bauteilen, wie z.B. den separaten Brennkammerelementen, Anzünderhülsen und Anzünderträger, wird die Montage aufwendig und somit teuer. Die Verwendung von Gehäuseschalen ermöglicht eine einfache, kostengünstige Produktion und Montage sowie eine leichte Bauweise des Außengehäuses. Das Außengehäuse muss bei Zünden des Gasgenerators äußerst belastbar sein.

Insbesondere ist aus dem Stand der Technik die Druckschrift EP 1 491 282 A1 (fig. 3) ein Gasgenerator bekannt, der ein Außengehäuse hat, welches zwei miteinander verbundene Gehäuseteile in Form einer Diffusorschale mit Ausströmöffnungen nach außen und einem unmittelbar mit der Diffusorschale verbundenen Deckel aufweist. Im Inneren des Gasgenerators sind eine erste und eine zweite Brennkammer vorgesehen, wobei die erste Brennkamer von einer Innenwand begrenzt ist, und die zweite Brennkammer innerhalb des von der Diffusorschale und des Deckels begrenzten Raumes liegt, wobei der Deckel einen zu einer Einbuchtung umgeformten, tiefgezogenen Abschnitt aufweist, der teilweise einen Umfangsabschnitt der Innenwand bildet.

An einem solchen Gasgenerator ist von Nachteil, dass ein separates Trägerbautell für die Aufnahme einer Anzündvorrichtung benötigt wird.

Ziel der Erfindung ist es, einen mehrstufigen Gasgenerator zu schaffen mit einer verstärkten mechanischen Struktur und einer vereinfachten und somit kostengünstigen Bauweise.

Diese Aufgabe wird durch die kennzeichnenden Merkmale des Patentanspruchs 1 gelöst.

Vorzugsweise ist die erste Brennkammer von der zweiten Brennkammer zumindest abschnittsweise, vorzugsweise vollständig, zumindest im Bereich der Umfangswandung der ersten Brennkammer umgeben.

Gemäß einer bevorzugten Ausführungsform sind die Gehäuseteile so geformt, dass sie entlang einer äußeren geschlossenen Kurve und entlang einer inneren geschlossenen Kurve miteinander verbunden sind, wobei zwischen der äußeren und inneren geschlossenen Kurve die zweite Brennkammer ausgebildet ist. Auf diese Weise ist es u. a. möglich, dass die zweite Brennkammer ringförmig ausgebildet sein kann und durch die beiden Gehäuseteile sowohl am äußeren als auch am inneren Umfang begrenzt wird.

Zumindest eine, vorzugsweise beide Kurven können eine Kreisform aufweisen. Auf diese Weise wird die Geometrie des Gasgenerators vereinfacht.

Es ist möglich, dass die Innenwand unmittelbar am Boden des gegenüberliegenden Gehäuseteils befestigt ist. Auf diese Weise wird ein Zuganker durch die unmittelbare Verbindung der beiden Gehäuseteile verwirklicht. Somit kann ein separates Element als Zuganker eingespart werden, und nur eine Verbindungsstelle für den Zuganker wird benötigt.

Vorzugsweise erfolgt eine Befestigung der Innenwand unmittelbar am Boden des gegenüberliegenden Gehäuseteils an der inneren Kurve. Auf diese Weise wird der Zuganker mit der Ausbildung der zweiten Brennkammer kombiniert.

Vorzugsweise sind die Gehäuseteile durch Schweißen miteinander verbunden, wobei die Schweißnähte insbesondere auf den Kurven liegen.

Die durch Umformen gebildete Einbuchtung und die dadurch gebildete erste Brennkammer ist beispielsweise durch ein Verschlussteil geschlossen, wobei das Verschlussteil vorzugsweise ein drittes Gehäuseteil bildet. Dies ermöglicht einen unabhängigen Verschluss der ersten Brennkammer.

Das Verschlussteil weist vorzugsweise eine oder mehrere Ausströmöffnungen für die erste Brennkammer auf, wobei die eine oder mehrere Ausströmöffnungen insbesondere in Richtung Außenbereich und/oder Innenbereich des Gasgenerators gerichtet sind. Auf diese Weise können separate Ausströmöffnungen für die erste Brennkammer vorgesehen sein.

Insbesondere hat das mit der Einbuchtung versehene Gehäuseteil außerhalb der Einbuchtung einen Boden, und das Verschlussteil schließt an den Boden an und/oder die Ausströmöffnung im Verschlussteil liegt im Wesentlichen auf Höhe des Bodens: Auf diese Weise ergibt sich eine im Wesentlichen einheitliche Form des Gasgenerators ohne stark ausgeprägte Einbuchtung oder Vorsprünge im Bereich des Verschlussteils.

Der ersten und zweiten Brennkammer können jeweils eigene Ausströmöffnungen, insbesondere nach außen, zugeordnet sein. Dies ermöglicht eine unabhängige Zündung der beiden Brennkammern.

Das Außengehäuse weist vorzugsweise eine axiale Mittelachse auf, und die Ausströmöffnungen der ersten Brennkammer liegen um wenigstens den Faktor 2 näher an der Mittelachse als die der zweiten Brennkammer. Auf diese Weise werden die Ausströmöffnungen der unterschiedlichen Brennkammern räumlich voneinander getrennt, wodurch die Belastungen auf die an den Gasgenerator angrenzenden Bauteile verringert werden.

Das Außengehäuse kann eine axiale Mittelachse aufweisen, und die erste Brennkammer kann symmetrisch zur Mittelachse angeordnet sein. Hierdurch werden Belastungen auf das Gasgeneratorgehäuse symmetrisch verteilt.

Gemäß einer weiteren Ausführungsform weist das Außengehäuse eine axiale Mittelachse auf, und die erste Brennkammer ist exzentrisch zur Mittelachse angeordnet. Es ergibt sich damit in der zweiten Brennkammer auf der der ersten Brennkammer gegenüberliegenden Seite der Mittelachse ein vergrößertes Volumen, welches beispielsweise zur Anbringung einer Anzündervorrichtung dienen kann.

Vorzugsweise weist der Deckel eine Schalenform auf. Dies ermöglicht eine einfache Herstellungsweise, beispielsweise durch Tiefziehen eines Bleches.

Gemäß einer bevorzugten Ausführungsform weist das mit der Einbuchtung versehene Gehäuseteil eine Schalenform auf. Die Einbuchtung erstreckt sich in das Innere der Schale.

Vorteilhafterweise kann die Einbuchtung in der Schalenform durch Tiefziehen in zwei Richtungen geformt werden.

Die Erfindung betrifft darüber hinaus einen Gasgenerator, der ein Außengehäuse umfasst, welches zumindest zwei miteinander verbundene Gehäuseteile in Form einer Diffusorschale mit Ausströmöffnungen und einem unmittelbar mit der Diffusorschale verbundenen Deckel aufweist. Im Inneren des Gasgenerators sind wenigstens zwei Brennkammern gebildet, denen eigene Anzündvorrichtungen zugeordnet sind, die in Öffnungen des Außengehäuses sitzen. Wenigstens eine der Anzündvorrichtungen ist durch eine Kunststoffumspritzung an einem der zwei Gehäuseteile befestigt. Dadurch, dass die Anzündvorrichtungen direkt an einem der Gehäuseteile befestigt sind, kann ein separater Träger für die Anzündvorrichtungen eingespart werden.

Gemäß einer bevorzugten Ausführungsform sind die Kunststoffumspritzungen der Anzündvorrichtungen voneinander getrennt. Dies ermöglicht auch eine getrennte Montage der Anzündvorrichtungen.

Gemäß einer weiteren Ausführungsform sind die Kunststoffumspritzungen der Anzündvorrichtungen miteinander verbunden. Somit können die Anzündvorrichtungen in einem gemeinsamen Verfahrensschritt am Gasgenerator befestigt werden.

Vorzugsweise sind in den Kunststoffumspritzungen unterschiedliche Geometrien aufweisende Anzündersteckeraufnahmen ausgebildet. Auf diese Weise kann eine Verwechslung der verschiedenen Anzündersteckeraufnahmen verhindert werden.

Das Gehäuseteil kann im Bereich der am Außengehäuse angeordneten Anzündvorrichtungen zumindest eine Vertiefung aufweisen, wobei sich Kontaktstifte der Anzündvorrichtung vorzugsweise in Richtung der Vertiefung oder in Gegenrichtung erstrecken. Vorzugsweise liegen die freien Enden der Kontaktstifte innerhalb der Vertiefung. Die Kontaktstifte sind somit vor mechanischem Einfluss geschützt, da die Kontaktstifte nicht aus der Vertiefung ins Freie herausragen.

Gemäß einer bevorzugten Ausführungsform ist die Vertiefung zumindest teilweise durch die Kunststoffumspritzung ausgekleidet.

Eine der zweiten Brennkammer zugeordnete Anzündvorrichtung kann in einem abgetrennten Bereich der ersten Brennkammer angeordnet sein. Auf diese Weise können beide Anzündvorrichtungen in der ersten Brennkammer angeordnet sein, was insbesondere bei einer symmetrischen Anordnung der ersten Brennkammer von Vorteil ist.

Vorzugsweise ist die erste Brennkammer in zwei voneinander unabhängige Bereiche unterteilt, wobei jedem Bereich eigene Ausströmöffnungen zugeordnet sind. Dies ermöglicht eine unabhängige Zündung der voneinander unabhängigen Brennkammerbereiche, und jedem Brennkammerbereich wird ein unterschiedlicher Ausströmweg für das im Brennkammerbereich erzeugte Gas ermöglicht.

Die Erfindung betrifft auch einen Gasgenerator, insbesondere gemäß der zuvor beschriebenen Art, bei welchem alle Ausströmöffnungen einer ersten Brennkammer derart im Außengehäuse angeordnet sind, dass sie auf einer Seite einer ersten Ebene liegen, die eine axiale Mittelachse des Außengehäuses enthält. Dies ermöglicht eine räumliche Trennung der Ausströmöffnungen der ersten Brennkammer.

Vorzugsweise liegen die im Außengehäuse der ersten Brennkammer angeordneten Ausströmöffnungen in einem Sektor, welcher von der ersten Ebene und einer weiteren, die axiale Mittelachse enthaltenden zweiten Ebene aufgespannt wird, wobei der Sektor insbesondere einen Winkel von kleiner oder gleich 180°, vorzugsweise kleiner oder gleich 135°, insbesondere von kleiner oder gleich 90° aufweist.

Austrittsöffnungen der zweiten Brennkammer sind beispielsweise auf einer, im Wesentlichen senkrecht zu der axialen Mittelachse liegenden dritten Ebene angeordnet.

Die Austrittsöffnungen der ersten Brennkammer sind vorzugsweise auf einer vierten Ebene angeordnet, die im Wesentlichen parallel zu der die Austrittsöffnungen der zweiten Brennkammer enthaltenden, dritten Ebene angeordnet ist.

Der Abstand zwischen der dritten und vierten Ebene kann größer 7 mm betragen, vorzugsweise zwischen 7 und 25 mm, weiter vorzugsweise zwischen 11 und 21 mm. Auf diese Weise ist eine räumliche Trennung in axialer Richtung der in der dritten und vierten Ebene angeordneten Abströmöffnungen möglich.

Darüber hinaus betrifft die Erfindung einen Gasgenerator, insbesondere wie zuvor beschrieben, der ein Außengehäuse umfasst, welches zumindest zwei miteinander verbundene Gehäuseteile in Form einer Diffusorschale mit Ausströmöffnungen und einen unmittelbar mit der Diffusorschale verbundenen Deckel aufweist, wobei im Inneren des Gasgenerators wenigstens eine erste und eine zweite Brennkammer vorgesehen sind und die zweite Brennkammer innerhalb des von der Diffusorschale und des Deckels begrenzten Raumes liegt. Die Diffusorschale bildet eine Trennwand zwischen der ersten und der zweiten Brennkammer. Auf diese Weise kann eine separate Trennwand zwischen der ersten und der zweiten Brennkammer eingespart werden.

Schließlich betrifft die Erfindung einen Gasgenerator, insbesondere wie zuvor beschrieben, mit einem Außengehäuse, welches zumindest zwei, vorzugsweise genau zwei, miteinander, entlang einer Umfangslinie, verbundene Gehäuseteile in Form einer Diffusorschale mit Ausströmöffnungen nach außen und einem unmittelbar mit der Diffusorschale verbundenen Deckel aufweist. Im Inneren des Gasgenerators sind wenigstens zwei Brennkammern ausgebildet, denen eigene Anzündvorrichtungen zugeordnet sind. Diffusorschale und Deckel trennen durch zumindest einen, von der Umfangslinie beabstandeten, gemeinsamen Kontaktbereich die beiden Brennkammern voneinander.

Ein erfindungsgemäßes Modul weist einen erfindungsgemäßen Gasgenerator, einen von dem Gasgenerator aufblasbaren Gassack und eine Befestigungseinrichtung zur Anbringung des Moduls, insbesondere im Innenbereich eines Fahrzeuges, auf.

Die bisher beschriebene zweite Brennkammer kann als Hauptbrennkammer des Gasgenerators verstanden werden, welche als erste von beiden Brennkammern gezündet werden kann. Zeitversetzt danach kann dann die bisher beschriebene erste Brennkammer gezündet werden. Genauso gut können die beiden Brennkammern aber auch in umgekehrter Reihenfolge gezündet werden. Ebenso können beide Brennkammern auch zeitgleich gezündet werden. Je nach Erfordernissen des Fahrzeuginsassenrückhaltesystems können also die Zündzeitpunkte der beiden Brennkammern zueinander abgestimmt werden.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 einen Schnitt durch einen Gasgenerator gemäß einer ersten Ausführungsform der Erfindung;
Figur 2 einen Schnitt durch einen Gasgenerator gemäß einer zweiten Ausführungsform der Erfindung mit kuppelförmigem Verschlussteil;
Figur 3 einen Schnitt durch einen Gasgenerator gemäß einer dritten Ausführungsform der Erfindung mit einer einzigen Vertiefung im Deckel;
Figur 4 einen Schnitt durch die Ebene IV-IV eines Gasgenerators gemäß Figur 2 oder Figur 3;
Figur 5 einen Schnitt durch einen Gasgenerator gemäß einer vierten Ausführungsform der Erfindung;
Figur 6 einen Schnitt durch einen Gasgenerator gemäß einer fünften Ausführungsform der Erfindung,

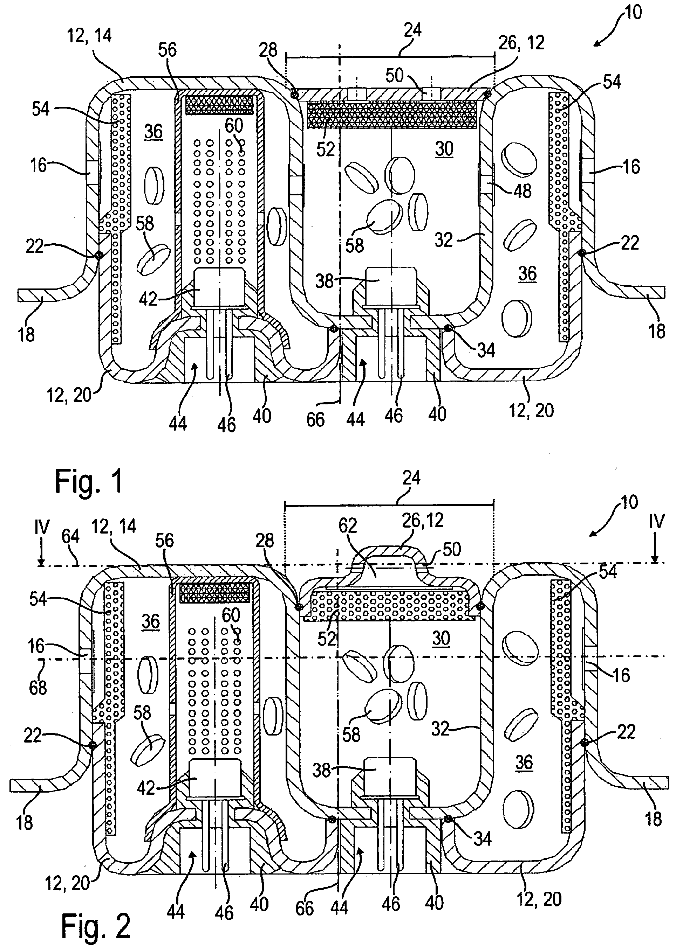

Figur 1 zeigt eine erste Ausführungsform eines Gasgenerators 10 mit einem Außengehäuse, welches mehrere miteinander verbundene Gehäuseteile 12 aufweist. Ein erstes Gehäuseteil ist eine Diffusorschale 14 mit Ausströmöffnungen 16 nach außen und einem Flansch 18, der zur Befestigung des Gasgenerators 10 in einem Gassackmodul eines Fahrzeuginsassenrückhaltesystems dient. Ein zweites Gehäuseteil 12 ist ein schalenförmiger Deckel 20, der an seinem äußeren Umfang entlang einer äußeren geschlossenen Kurve 22 mit der Diffusorschale 14 durch Schweißen verbunden ist, wobei die Schweißnaht auf der Kurve 22 liegt. Der Deckel 20 und die Kurve 22 sind kreisförmig.

Die Diffusorschale 14 weist einen Abschnitt 24 auf, der zu einer Einbuchtung umgeformt ist, die sich ins Innere des Gasgenerators ziehend erstreckt. Die Einbuchtung wird im Wesentlichen auf der Höhe des Bodens der Diffusorschale 14, welcher teilweise die Stirnwand des Gasgenerators 10 bildet, von einem Verschlussteil 26 verschlossen, wobei das Verschlussteil 26 ein drittes Gehäuseteil 12 bildet. Das Verschlussteil 26 schließt an den Boden der Diffusorschale 14 an und ist über eine Verbindungsstelle 28 mit der Diffusorschale verbunden, z.B. durch Schweißen.

Durch die Einbuchtung in der Diffusorschale 14 und das Verschlussteil 26 wird ein Hohlraum definiert, der eine erste, insbesondere innere, Brennkammer 30 bildet. Die erste Brennkammer 30 wird durch eine Innenwand 32 begrenzt, die durch die Diffusorschale 14 im Abschnitt 24 der Einbuchtung gebildet wird. Die Innenwand 32 erstreckt sich bis zum gegenüberliegenden Deckel 20 und ist unmittelbar am Boden des Deckels 20 entlang einer inneren geschlossenen Kurve 34 befestigt.

Die Kurve 34, entlang welcher die Innenwand 32 am Boden des Deckels 20 befestigt ist, ist vorzugsweise kreisförmig und bildet einen Kontaktbereich zwischen Diffusorschale 14 und Deckel 20. Andere, auch unterbrochene Kurven-, und/ oder Segmentgeometrien, Punkt- oder Linienkontaktbereiche sind ebenso denkbar. Durch die Befestigung der Innenwand am Boden des gegenüberliegenden Gehäuseteils 12, wird ein Zuganker ausgebildet, der die Stabilität des Außengehäuses des Gasgenerators verbessert.

Eine erste Anzündvorrichtung 38 ist in der ersten Brennkammer 30 angeordnet und erstreckt sich durch eine Öffnung der Diffusorschale 14 und des Deckels 20. Die erste Anzündvorrichtung ist vorzugsweise durch eine Kunststoffumspritzung 40 an der Diffusorschale 14 befestigt. Alternativ, auch für alle anderen beschriebenen Anzündvorrichtungen, kann auch eine Glas-Metall-Dichtung vorgesehen sein.

Eine zweite Brennkammer 36 liegt innerhalb des von der Diffusorschale 14 und des Deckels 20 begrenzten ringförmigen Raumes. Die Innenwand 32 bildet eine Trennwand zwischen der ersten und der zweiten Brennkammer 30, 36 und ist ein einstückiger Bestandteil der Diffusorschale 14.

Eine zweite Anzündvorrichtung 42 ist der zweiten Brennkammer 36 zugeordnet und erstreckt sich durch eine Öffnung im Deckel 20, wobei sie durch eine weitere Kunststoffumspritzung 40 am Deckel 20 befestigt ist.

Der Deckel 20 weist jeweils im Bereich der Anzündvorrichtungen 38, 42 eine Vertiefung 44 auf, in die sich die Kontaktstifte 46 der Anzündvorrichtungen 38, 42 erstrecken, wobei die freien Enden der Kontaktstifte 46 innerhalb der Vertiefung liegen und somit vor mechanischen Belastungen geschützt werden. Die Vertiefungen 44 sind zumindest teilweise durch die Kunststoffumspritzungen 40 ausgekleidet.

Um eine Verwechslung der Anschlüsse der beiden Anzündvorrichtungen 38, 42 zu verhindern, sind die Kunststoffumspritzungen 40 als Anzündersteckeraufnahmen mit unterschiedlichen Geometrien ausgebildet. Auf diese Weise wird verhindert, dass ein Anzünderstecker mit der falschen Anzündvorrichtung 38, 42 verbunden wird. Ebenso ist ein dritter bzw. weitere Anschlüsse, z.B. ein Masseanschluss, vorsehbar. Dies gilt für alle beschriebenen Anzündvorrichtungen.

Die erste Brennkammer 30 weist erste Ausströmöffnungen 48 auf, die sich in radialer Richtung durch die Innenwand 32 erstrecken und eine Verbindung der ersten Brennkammer 30 mit der zweiten Brennkammer 36 darstellen. Des Weiteren weist die erste Brennkammer 30 zweite Ausströmöffnungen 50 auf, die sich in axialer Richtung durch das Verschlussteil 26 erstrecken und nach außen weisen.

Es ist natürlich möglich, dass die erste Brennkammer 30 nur Ausströmöffnungen 48 in der Innenwand 32 aufweist oder nur Ausströmöffnungen 50 im Verschlussteil 26.

Ein erstes Filterelement 52 ist stirnseitig und vor den im Verschlussteil 26 vorgesehenen Ausströmöffnungen 50 angeordnet, und ein zweites Filterelement 54 ist in der zweiten Brennkammer 36 vor den Ausströmöffnungen 16 angeordnet. Die Filterelemente 52, 54 dienen zur Kühlung des austretenden Gases und verhindern ein Austreten von heißen Partikeln aus dem Außengehäuse des Gasgenerators 10.

Die erste Brennkammer 30 ist vorzugsweise assymmetrisch im Gasgenerator 10 angeordnet, sondern exzentrisch zu einer Mittelachse 66 des Gasgenerators 10. Durch die exzentrische Anordnung der ersten Brennkammer 30, in der gezeigten Ausführungsform auf der rechten Seite des Gasgenerators 10, ergibt sich auf der gegenüberliegenden Seite der zweiten Brennkammer 36 ein vergrößertes Volumen, welches für die Platzierung der zweiten Anzündvorrichtung 42 genutzt wird.

Eine Anzündhülse 56 ist innerhalb der zweiten Brennkammer 36 über der Anzündvorrichtung 42 angeordnet und dient dazu, eine homogene Zündung in der zweiten Brennkammer 36 zu erreichen.

Die erste und zweite Brennkammer 30, 36 sind mit einem ersten Brennstoff 58 gefüllt, wobei die Beschaffenheit (chemische Zusammensetzung und/ oder geometrische Form) des Brennstoffes 58 in den jeweiligen Kammern unterschiedlich oder identisch sein kann. Ein zweiter Brennstoff 60 ist innerhalb der Anzündhülse 56 vorgesehen.

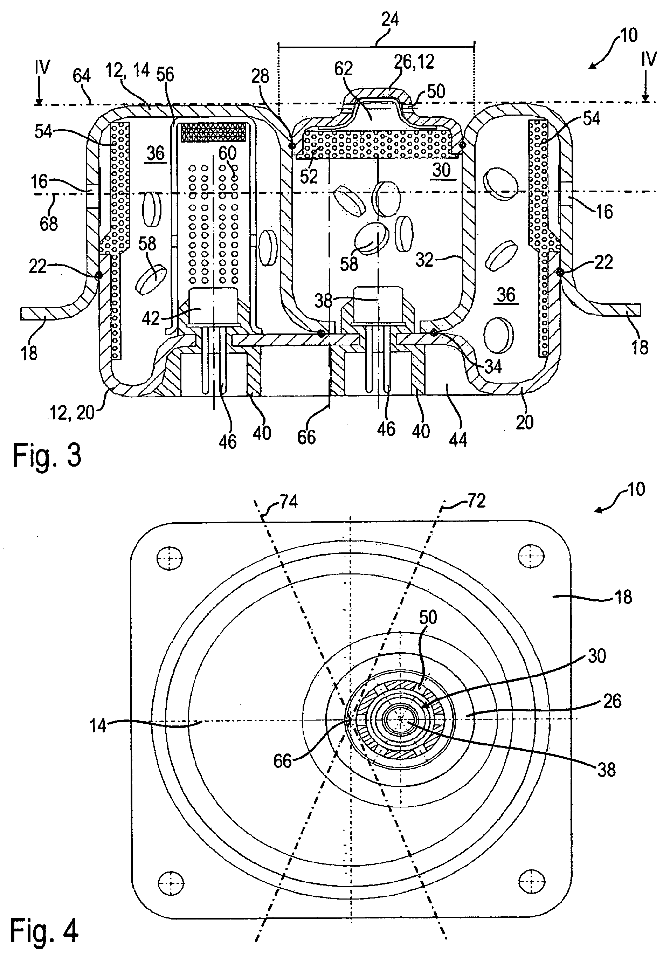

In den Figuren 2 bis 4 sind eine erste und zweite Ebene 72, 74 (vgl. Figur 4), die eine axiale Mittelachse 66 des Außengehäuses des Gasgenerators 10 enthalten, und eine dritte und vierte Ebene 68, 64 (vgl. Figuren 2 und 3), die im Wesentlichen senkrecht zur axialen Mittelachse 66 liegen, definiert.

Figur 2 zeigt eine zweite Ausführungsform der Erfindung. Die zweite Ausführungsform ist weitgehend analog zur in Figur 1 gezeigten Ausführungsform, wobei entsprechende Bauteile mit gleichen Bezugszeichen gekennzeichnet sind. Die zweite Ausführungsform unterscheidet sich von der ersten Ausführungsform durch ein verändertes Verschlussteil 26 und veränderte Ausströmöffnungen 50. Des Weiteren sind keine Ausströmöffnungen 48 in der Innenwand 32 der ersten Brennkammer vorgesehen.

Das Verschlussteil 26 ist L-förmig ausgeführt, wobei in einem ersten Bereich der Kuppel des erste Filterelement 52 angeordnet ist und in einem zweiten Bereich der Kuppel ein Hohlraum 62 vorgesehen ist. Vom Hohlraum 62 erstrecken sich Ausströmöffnungen 50 durch das Verschlussteil 26 in radialer Richtung. Die Ausströmöffnungen 50 im Verschlussteil 26 liegen im Wesentlichen auf Höhe des Bodens der Diffusorschale 14 in einer im Wesentlichen senkrecht zur axialen Mittelachse 66 liegenden vierten Ebene 64. Die Ausströmöffnungen 16 der zweiten Brennkammer 36 sind in einer im Wesentlichen senkrecht zur axialen Mittelachse liegenden dritten Ebene 68 angeordnet, die im Wesentlichen parallel zu der vierten Ebene 64 angeordnet ist. Die Ebenen 64, 68 sind voneinander beabstandet, wobei der Abstand zwischen den Ebenen größer 7 mm beträgt oder zwischen 7 mm und 25 mm bzw. zwischen 11 mm und 21 mm liegt.

Figur 3 zeigt eine dritte Ausführungsform der Erfindung, die weitgehend analog zur in Figur 2 gezeigten Ausführungsform ist, wobei entsprechende Bauteile mit gleichen Bezugszeichen gekennzeichnet sind. Die dritte Ausführungsform weist einen Deckel 20 auf, in der die erste und zweite Anzündvorrichtung 38, 42 in einer gemeinsamen Vertiefung 44 angeordnet sind. Die Kunststoffumspritzungen 40 der Anzündvorrichtungen 38, 42 sind in der gezeigten Ausführungsform voneinander getrennt. Es ist natürlich auch möglich, dass die Kunststoffumspritzungen der beiden Anzündvorrichtungen 38, 42 miteinander verbunden sind.

Die erste Anzündvorrichtung 38 ist mit der Kunststoffumspritzung 40 im Gegensatz zu den oben beschriebenen Ausführungsformen am Deckel 20 befestigt.

Figur 4 zeigt einen Schnitt durch den Gasgenerator 10 (eine Draufsicht auf den Schnitt durch die Ebene IV-IV) gemäß der Figuren 2 oder 3. Das erste Filterelement 52 ist in der Ansicht entfernt, wodurch in die erste Brennkammer 30 hineingesehen werden kann, insbesondere auf die erste Anzündvorrichtung 38. Die erste Brennkammer 30 und damit das Verschlussteil 26 ist exzentrisch auf der rechten Seite der Mittelachse 66 angeordnet. Alle Ausströmöffnungen 50 liegen in einem Sektor, der durch die strichpunktiert gezeigten Ebenen 72, 74 aufgespannt wird, wobei der Sektor einen Winkel von 135° aufweist. Es ist auch möglich, dass der Sektor einen Winkel von kleiner oder gleich 180°, kleiner 135° oder kleiner oder gleich 90° aufweist. Bei einem Winkel von 180° fallen die Ebenen 72, 74 zusammen und alle Ausströmöffnungen 50 liegen auf einer Seite der Ebene. Die Ausströmöffnungen 50 der ersten Brennkammer 36 liegen darüber hinaus um wenigsten einen Faktor 2 näher an der Mittelachse 66 als die Ausströmöffnungen 16 der zweiten Brennkammer 36 (vgl. Figur 2 oder 3).

Die räumliche Trennung der Ausströmöffnungen 16, 50 durch unterschiedlichen Abstand zur Mittelachse 66, die Anordnung in unterschiedlichen Sektoren des Gasgeneratorgehäuses oder die Beabstandung der Ebenen 64, 68 in welcher die Ausströmöffnungen 16, 50 angeordnet sind, verringert die Belastung der an den Gasgenerator 10 angrenzenden Bauteile des Gassackmoduls, insb. des Gassacks.

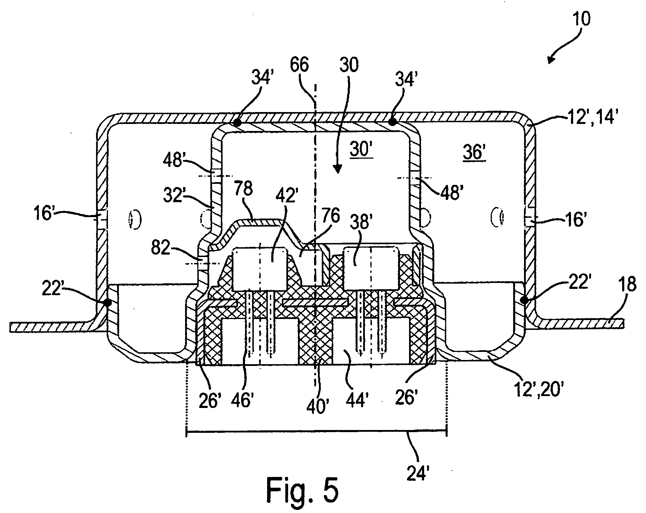

Figur 5 zeigt eine vierte Ausführungsform der Erfindung, bei der ein Abschnitt 24' im Deckel 20' zu einer Einbuchtung umgeformt ist. Auch hier tragen entsprechende Bauteile wieder gleiche Bezugszeichen. Die Einbuchtung wird durch ein Verschlussteil 26' verschlossen, welches an den Boden des Deckels 20' anschließt. Eine erste Anzündvorrichtung 38' und eine zweite Anzündvorrichtung 42' sind über eine, vorzugsweise gemeinsame, Kunststoffumspritzung 40' am Verschlussteil 26' befestigt. Die Kunststoffumspritzung 40' bündelt zwei Anzündersteckeraufnamen mit Kontaktstiften 46', die in einer Vertiefung 44' des Verschlussteils 26' liegen und analog zu den oben beschriebenen Ausführungsformen ausgeführt sind. Denkbar sind auch getrennte Kunststoffumspritzungen der zumindest zwei Anzünder.

Der Deckel 20' bildet im Abschnitt 24' eine Innenwand 32', die vorzugsweise symmetrisch um eine Mittelachse 66' des Gasgenerators 10' angeordnet ist. Die Innenwand 32' erstreckt sich bis zum Boden der gegenüberliegenden Diffusorschale 14' und ist dort unmittelbar befestigt, vorzugsweise entlang einer inneren geschlossenen Kurve 34'. Im Inneren der Einbuchtung ist durch das Verschlussteil 26' ein Hohlraum definiert, der eine erste Brennkammer 30 bildet.

Ein Bereich 76 ist durch ein Trennelement 78 von der ersten Brennkammer 30 abgetrennt. Die zweite Anzündvorrichtung 42' ist in diesem abgetrennten Bereich 76 angeordnet. Dem abgetrennten Bereich 76 sind eigene Ausströmöffnungen 82 zugeordnet, die den abgetrennten Bereich 76 mit einer vorzugsweise ringförmigen, zweiten Brennkammer 36' verbinden.

Die Innenwand 32' bildet eine Trennwand zwischen der ersten Brennkammer 30 und der zweiten Brennkammer 36', in der Ausströmöffnungen 48' angeordnet sind, die die beiden Brennkammern 30, 36' miteinander verbinden. Die erste Brennkammer 30 ist somit in zwei voneinander unabhängige Bereiche 76, 30' abgetrennt, wobei jedem Bereich verschiedene Ausströmöffnungen 82, 48' zugeordnet sind. Die Diffusorschale 14' weist Ausströmöffnungen 16' nach außen auf.

Weitere Bauteile des Gasgenerators 10', wie z. B. Brennstofftabletten, Filterelemente oder Brennkammerverschlusselemente, sind in Figur 5 nicht gezeigt.

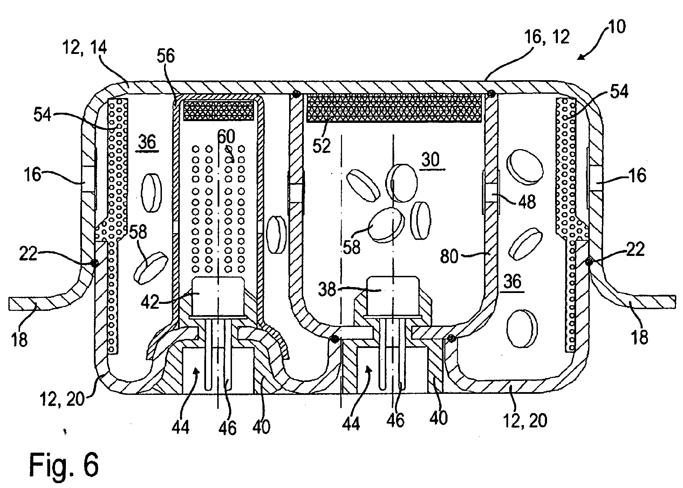

Figur 6 zeigt eine fünfte Ausführungsform der Erfindung, bei der ein Gasgenerator 10 ein separates Brennkammerwandelement 80 umfasst, welches auf einer Seite mit der Diffusorschale 14 und auf seiner anderen Seite mit dem Deckel 20 verbunden ist. Die erste Anzündvorrichtung 38 ist über eine Kunststoffumspritzung 40 am Brennkammerwandelement 80 befestigt, und eine zweite Anzündvorrichtung 42 ist über eine Kunststoffumspritzung 40 am Deckel 20 befestigt. Eine erste Brennkammer 30, die im Inneren des separaten Brennkammerwandelements 80 ausgebildet ist, ist über Ausströmöffnungen 48 mit der zweiten ringförmigen Brennkammer 36 verbunden. Weitere Bauteile des Gasgenerators 10 sind analog zur in Figur 1 gezeigten Ausführungsform vorgesehen.

## Patentansprüche

1. Gasgenerator (10) mit einem Außengehäuse, welches zumindest zwei miteinander verbundene Gehäuseteile (12) in Form einer Diffusorschale (14) mit Ausströmöffnungen (16) nach außen und einem unmittelbar mit der Diffusorschale (14) verbundenen Deckel (20) aufweist, wobei im Inneren des Gasgenerators (10) wenigstens eine erste und eine zweite Brennkammer (30, 36) vorgesehen sind, und wobei die erste Brennkammer (30) von einer Innenwand (32) begrenzt ist, und die zweite Brennkammer (36) innerhalb des von der Diffusorschale (14) und des Deckels (20) begrenzten Raumes liegt, wobei die Diffusorschale (14) und/oder der Deckel (20) einen zu einer Einbuchtung umgeformten, tiefgezogenen Abschnitt (24) aufweisen, der zumindest teilweise einen Umfangsabschnitt der Innenwand (32) bildet, **dadurch gekennzeichnet, dass** sich eine der ersten Brennkammer (30) zugeordnete erste Anzündvorrichtung (38) durch eine Öffnung der Diffusorschale (14) und des Deckels (20) erstreckt.

2. Gasgenerator nach Anspruch 1, **dadurch gekennzeichnet, dass** die erste Brennkammer (30) von der zweiten Brennkammer (36; 36') zumindest abschnittsweise, vorzugsweise vollständig, zumindest im Bereich der Umfangswandung der ersten Brennkammer (30) umgeben ist.

3. Gasgenerator nach Anspruch 1 oder 2, **dadurch gekennzeichnet, dass** die Gehäuseteile (12; 12') so geformt sind, dass sie entlang einer äußeren geschlossenen Kurve (22; 22') und entlang einer inneren geschlossenen Kurve (34; 34') miteinander verbunden sind, wobei zwischen der äußeren und inneren geschlossenen Kurve (22, 34; 22', 34') die zweite Brennkammer (36; 36') ausgebildet ist.

4. Gasgenerator nach Anspruch 3, **dadurch gekennzeichnet, dass** zumindest eine, vorzugsweise beide Kurven (22, 34; 22', 34') eine Kreisform aufweisen.

5. Gasgenerator nach einem der vorhergehenden Ansprüche, **dadurch gekennzeichnet, dass** die Innenwand (32; 32') unmittelbar am Boden des gegenüberliegenden Gehäuseteils (12; 12') befestigt ist.

6. Gasgenerator nach einem der Ansprüche 3 bis 5, **dadurch gekennzeichnet, dass** eine Befestigung der Innenwand (32; 32') unmittelbar am Boden des gegenüberliegenden Gehäuseteils an der inneren Kurve (34; 34') erfolgt.

7. Gasgenerator nach einem der vorhergehenden Ansprüche, **dadurch gekennzeichnet, dass** die Gehäuseteile (12; 12') durch Schweißen miteinander verbunden sind, wobei die Schweißnähte vorzugsweise auf den Kurven (22, 34; 22', 34') liegen.

8. Gasgenerator nach einem der vorhergehenden Ansprüche, **dadurch gekennzeichnet, dass** die Diffusorschale (14; 14') Ausströmöffnungen (16; 16') für zumindest die, insbesondere nur für die zweite Brennkammer (36; 36') aufweist.

9. Gasgenerator nach einem der vorhergehenden Ansprüche, **dadurch gekennzeichnet, dass** die Innenwand (32) durch die umgeformte Diffusorschale (14) gebildet wird.

10. Gasgenerator nach einem der vorhergehenden Ansprüche, **dadurch gekennzeichnet, dass** die durch Umformen gebildete Einbuchtung und die dadurch gebildete erste Brennkammer (30) durch ein Verschlussteil (26; 26') geschlossen ist, wobei das Verschlussteil (26; 26') vorzugsweise ein drittes Gehäuseteil (12; 12') bildet.

11. Gasgenerator nach Anspruch 10, **dadurch gekennzeichnet, dass** das Verschlussteil (26) eine oder mehrere Ausströmöffnungen (50) für die erste Brennkammer (30) aufweist, wobei die eine oder mehrere Ausströmöffnungen (50) insbesondere in Richtung Außenbereich und/oder Innenbereich des Gasgenerators (10) gerichtet sind.

12. Gasgenerator nach Anspruch 11, **dadurch gekennzeichnet, dass** das mit der Einbuchtung versehene Gehäuseteil (12, 12') außerhalb der Einbuchtung einen Boden aufweist und das Verschlussteil (26, 26') an den Boden anschließt und/oder die Ausströmöffnung (50) im Verschlussteil (26) im Wesentlichen auf Höhe des Bodens liegt.

13. Gasgenerator nach einem der vorhergehenden Ansprüche, **dadurch gekennzeichnet, dass** der ersten und zweiten Brennkammer (30, 36) jeweils eigene Ausströmöffnungen (50, 16) zugeordnet sind.

14. Gasgenerator nach Anspruch 13, **dadurch gekennzeichnet, dass** das Außengehäuse eine axiale Mittelachse (66) aufweist und die Ausströmöffnungen (50) der ersten Brennkammer (30) um wenigstens den Faktor 2 näher an der Mittelachse (66) liegen als die der zweiten Brennkammer (36).

15. Gasgenerator nach einem der vorhergehenden Ansprüche, **dadurch gekennzeichnet, dass** das Außengehäuse eine axiale Mittelachse (66) aufweist und die erste Brennkammer (30) symmetrisch zur Mittelachse (66) angeordnet ist.

16. Gasgenerator nach einem der Ansprüche 1 bis 14, **dadurch gekennzeichnet, dass** das Außengehäuse eine axiale Mittelachse (66) aufweist und die erste Brennkammer (30) exzentrisch zur Mittelachse (66) angeordnet ist.

17. Gasgenerator nach einem der vorhergehenden Ansprüche, **dadurch gekennzeichnet, dass** der Deckel (20; 20') eine Schalenform aufweist.

18. Gasgenerator nach einem der vorhergehenden Ansprüche, **dadurch gekennzeichnet, dass** das mit der Einbuchtung versehene Gehäuseteil (12; 12') eine Schalenform aufweist und sich die Einbuchtung in das Innere der Schale erstreckt.

19. Gasgenerator nach einem der vorhergehenden Ansprüche, **dadurch gekennzeichnet, dass** eine der zweiten Brennkammer (36') zugeordnete Anzündvorrichtung (42') in einem abgetrennten Bereich (76) der ersten Brennkammer angeordnet ist.

20. Gasgenerator nach einem der vorhergehenden Ansprüche, **dadurch gekennzeichnet, dass** die erste Brennkammer (30) in zwei von einander unabhängige Bereiche (76) unterteilt ist, wobei jedem Bereich (76) eigene Ausströmöffnungen (48', 82) zugeordnet sind.

21. Gasgenerator, nach einem der vorhergehenden Ansprüche, **dadurch gekennzeichnet, dass** alle Ausströmöffnungen (50) der ersten Brennkammer (30) derart im Außengehäuse des Gasgenerators angeordnet sind, dass sie auf einer Seite einer ersten Ebene (72) liegen, die eine axiale Mittelachse (66) des Außengehäuses enthält.

22. Gasgenerator nach Anspruch 21, **dadurch gekennzeichnet, dass** die im Außengehäuse der ersten Brennkammer (30) angeordneten Ausströmöffnungen (50) in einem Sektor liegen, welcher von der ersten Ebene (72) und einer weiteren, die axiale Mittelachse (66) enthaltenden zweiten Ebene (74) aufgespannt wird, wobei der Sektor vorzugsweise einen Winkel von kleiner oder gleich 180°, vorzugsweise kleiner oder gleich 135°, insbesondere von kleiner oder gleich 90° aufweist.

23. Gasgenerator nach Anspruch 21 oder 22, **dadurch gekennzeichnet, dass** Ausströmöffnungen (16) der zweiten Brennkammer (36) auf einer, im Wesentlichen senkrecht, zu der axialen Mittelachse (66) liegenden, dritten Ebene (68) angeordnet sind, weiterhin vorzugsweise **dadurch gekennzeichnet, dass** die Ausströmöffnungen (50) der ersten Brennkammer (30) auf einer vierten Ebene (64) angeordnet sind, die im Wesentlichen parallel zu der die Ausströmöffnungen (16) der zweiten Brennkammer (36) enthaltenden, dritten Ebene (68) angeordnet ist.

24. Gasgenerator nach Anspruch 23, **dadurch gekennzeichnet, dass** der Abstand zwischen den dritten und vierten Ebenen (68, 64) größer 7 mm beträgt, vorzugsweise zwischen 7 und 25 mm, weiter vorzugsweise zwischen 11 und 21 mm beträgt.

25. Modul mit einem Gasgenerator, einem von dem Gasgenerator (10) aufblasbaren Gassack und einer Befestigungseinrichtung zur Anbringung des Moduls, insbesondere im Innenbereich eines Fahrzeuges, **dadurch gekennzeichnet, dass** der Gasgenerator (10) nach zumindest einem der Ansprüche 1 bis 24 ausgebildet ist.

## Claims

1. An inflator (10) comprising an outer casing which includes at least two interconnected casing parts (12) in the form of a diffuser shell (14) having discharge orifices (16) to the outside and a cover (20) directly connected to the diffuser shell (14), wherein at least first and second combustion chambers (30, 36) are provided inside the inflator (10) and wherein the first combustion chamber (30) is delimited by an inner wall (32) and the second combustion chamber (36) is located inside the space delimited by the diffuser shell (14) and the cover (20), wherein the diffuser shell (14) and/or the cover (20) comprise a deep-drawn portion (24) shaped into an indentation and forming at least partly a peripheral portion of the inner wall (32), **characterized in that** a first ignition device (38) associated with the first combustion chamber (30) extends through an opening of the diffuser shell (14) and of the cover (20).

2. The inflator according to claim 1, **characterized in that** the first combustion chamber (30) is surrounded by the second combustion chamber (36; 36') at least in portions, preferably completely, at least in the area of the peripheral wall of the first combustion chamber (30).

3. The inflator according to claim 1 or 2, **characterized in that** the casing parts (12; 12') are shaped so that they are interconnected along an outer closed curve (22; 22') and along an inner closed curve (34; 34'), with the second combustion chamber (36; 36') being formed between the outer and inner closed curves (22, 34; 22', 34').

4. The inflator according to claim 3, **characterized in that** at least one, preferably both curves (22, 34; 22', 34') have a circular shape.

5. The inflator according to any one of the preceding claims, **characterized in that** the inner wall (32; 32') is mounted directly on the bottom of the opposite casing part (12; 12').

6. The inflator according to any one of the claims 3 to 5, **characterized in that** the inner wall (32; 32') is mounted directly on the bottom of the opposite casing part at the inner curve (34; 34').

7. The inflator according to any one of the preceding claims, **characterized in that** the casing parts (12; 12') are interconnected by welding, wherein the weld seams are preferably located on the curves (22, 34; 22', 34').

8. The inflator according to any one of the preceding claims, **characterized in that** the diffuser shell (14; 14') includes discharge orifices (16; 16') for at least and especially only for the second combustion chamber (36; 36').

9. The inflator according to any one of the preceding claims, **characterized in that** the inner wall (32) is formed by the shaped diffusor shell (14).

10. The inflator according to any one of the preceding claims, **characterized in that** the indentation formed by shaping and the first combustion chamber (30) formed in this way are closed by a closing member (26; 26'), the closing member (26; 26') preferably forming a third casing part (12; 12').

11. The inflator according to claim 10, **characterized in that** the closing member (26) comprises one or more discharge orifices (50) for the first combustion chamber (30), the one or more discharge orifices (50) being directed especially toward the outer area and/or the inner area of the inflator (10).

12. The inflator according to claim 11, **characterized in that** the casing part (12, 12') provided with the indentation has a bottom outside of the indentation and the closing member (26, 26') is adjacent to the bottom and/or the discharge orifice (50) is located in the closing member (26) substantially level with the bottom.

13. The inflator according to any one of the preceding claims, **characterized in that** separate discharge orifices (50, 16) are associated with each of the first and second combustion chambers (30, 36).

14. The inflator according to claim 13, **characterized in that** the outer casing includes an axial center axis (66) and the discharge orifices (50) of the first combustion chamber (30) are closer to the center axis (66) than those of the second combustion chamber (36) by at least the factor 2.

15. The inflator according to any one of the preceding claims, **characterized in that** the outer casing includes an axial center axis (66) and the first combustion chamber (30) is arranged symmetrically with respect to the center axis (66).

16. The inflator according to any one of the claims 1 to 14, **characterized in that** the outer casing includes an axial center axis (66) and the first combustion chamber (30) is arranged eccentrically with respect to the center axis (66).

17. The inflator according to any one of the preceding claims, **characterized in that** the cover (20; 20') takes the form of a shell.

18. The inflator according to any one of the preceding claims, **characterized in that** the casing part (12; 12') provided with the indentation takes the form of a shell and the indentation extends into the interior of the shell.

19. The inflator according to any one of the preceding claims, **characterized in that** an ignition device (42') associated with the second combustion chamber (36') is arranged in a separated portion (76) of the first combustion chamber.

20. The inflator according to any one of the preceding claims, **characterized in that** the first combustion chamber (30) is divided into two portions (76) independent of each other, wherein separate discharge orifices (48', 82) are associated with each portion (76).

21. The inflator according to any one of the preceding claims, **characterized in that** all discharge orifices (50) of the first combustion chamber (30) are arranged in the outer casing of the inflator so that they are located on a side of a first plane (72) that comprises an axial center axis (66) of the outer casing.

22. The inflator according to claim 21, **characterized in that** the discharge orifices (50) arranged in the outer casing of the first combustion chamber (30) are located within a sector which is spanned by the first plane (72) and another second plane (74) comprising the axial center axis (66), wherein said sector preferably encloses an angle of less than or equal to 180°, preferably less than or equal to 135°, especially less than or equal to 90°.

23. The inflator according to claim 21 or 22, **characterized in that** discharge orifices (16) of the second combustion chamber (36) are arranged on a third plane (68) located substantially normal to the axial center axis (66), further preferably **characterized in that** the discharge orifices (50) of the first combustion chamber (30) are arranged on a fourth plane (64) which is arranged substantially in parallel to the third plane (68) comprising the discharge orifices (16) of the second combustion chamber (36).

24. The inflator according to claim 23, **characterized in that** the distance between the third and fourth planes (68, 64) is larger than 7 mm, preferably between 7 and 25 mm, further preferred between 11 and 21 mm.

25. A module comprising an inflator, an airbag adapted to be inflated by the inflator (10) and a mounting means for arranging said module, especially in the interior of a vehicle, **characterized in that** the inflator (10) is configured in accordance with at least one of the claims 1 to 24.

## Revendications

1. Générateur de gaz (10) possédant un boîtier extérieur, lequel comprend au moins deux parties de boîtier reliées entre elles (12) une étant une enveloppe de diffuseur (14) en forme de coupelle avec des ouvertures d'évacuation (16) vers l'extérieur et l'autre sous la forme d'un couvercle (20) directement relié avec le diffuseur (14), de sorte qu'à l'intérieur du générateur de gaz (10) sont prévues au moins une première et une seconde chambre de combustion (30, 36), et dans lequel la première chambre de combustion (30) est délimitée par une paroi intérieure (32), et pour lequel la seconde chambre de combustion (36) se situe au sein de l'espace défini par l'enveloppe de diffuseur (14) et le couvercle (20), pour lequel ladite enveloppe de diffuseur (14) et/ou le couvercle (20) présentent une section (24) obtenue par emboutissage profond formant un évidement, laquelle forme partiellement au moins une section périphérique de la paroi intérieure (32), **caractérisé en ce qu'**elle prolonge la première chambre de combustion (30) associée au premier dispositif d'allumage (38) à travers une ouverture de l'enveloppe de diffuseur (14) et du couvercle (20).

2. Générateur de gaz selon la revendication 1, **caractérisé en ce que** la première chambre de combustion (30) est entourée de la seconde chambre de combustion (36; 36 '), au moins partiellement, de préférence complètement, au moins dans la zone de la paroi périphérique de la première chambre de combustion (30).

3. Générateur de gaz selon la revendication 1 ou 2, **caractérisé en ce que** les parties de boîtier (12; 12 ') sont formées de sorte qu'elles sont reliées l'une à l'autre le long d'une courbe extérieure fermée (22; 22') et le long d'une courbe intérieure fermée (34; 34 '), pour lequel la deuxième chambre de combustion (36; 36') est formée entre la courbe extérieure et intérieure fermée (22, 34; 22 ', 34').

4. Générateur de gaz selon la revendication 3, **caractérisé en ce qu'**au moins une, de préférence les deux courbes (22, 34; 22', 34 ') ont une forme circulaire.

5. Générateur de gaz selon l'une quelconque des revendications précédentes, **caractérisé en ce que** la paroi intérieure (32; 32 ') est fixée directement à la partie inférieure de la partie de boîtier située à l'opposé (12 12').

6. Générateur de gaz selon l'une quelconque des revendications 3 à 5, **caractérisé en ce qu'**une fixation de la paroi intérieure (32; 32') se trouve directement en face de la partie inférieure de la partie de boîtier située à l'opposé sur la courbe intérieure (34; 34 ').

7. Générateur de gaz selon l'une quelconque des revendications précédentes, **caractérisé en ce que** les parties de boîtier (12; 12 ') sont reliées entre elles par soudage, pour lequel les cordons de soudure se situent de préférence sur les courbes (22, 34; 22', 34 ').

8. Générateur de gaz selon l'une quelconque des revendications précédentes, **caractérisé en ce que** l'enveloppe de diffuseur (14; 14) possède des ouvertures d'évacuation (16; 16 ') pour au moins les, en particulier uniquement pour la seconde chambre de combustion (36: 36').

9. Générateur de gaz selon l'une quelconque des revendications précédentes, **caractérisé en ce que** la paroi intérieure (32) est formée par la forme donnée à l'enveloppe du diffuseur (14).

10. Générateur de gaz selon l'une quelconque des revendications précédentes, **caractérisé en ce qu'**il, au travers de l'évidement formé présent et de la première chambre de combustion (30) ainsi formée est fermé par une pièce de fermeture (26; 26 '), pour lequel la pièce de fermeture (26; 26') est de préférence une troisième partie de boîtier (12; 12').

11. Générateur de gaz selon la revendication 10, **caractérisé en ce que** la pièce de fermeture (26) possède une ou plusieurs ouvertures d'évacuation (50) pour la première chambre de combustion (30), pour lequel une ou plusieurs ouvertures d'évacuation (50) sont dirigées, en particulier dans la direction extérieure et/ou intérieure du générateur de gaz (10).

12. Générateur de gaz selon la revendication 11, **caractérisé en ce qu'**il présente avec la partie de boitier (12, 12') munie de l'évidement un fond à l'extérieur de l'évidement, et que la partie de fermeture (26, 26) se raccorde au fond, et/ou l'ouverture d'évacuation (50) de l'élément de fermeture (26) est située sensiblement au niveau du fond.

13. Générateur de gaz selon l'une quelconque des revendications précédentes, **caractérisé en ce que** la première et la seconde chambre de combustion (30, 30) sont agencées chacune ayant ses propres ouvertures d'évacuation (50, 16).

14. Générateur de gaz selon la revendication 13, **caractérisé en ce que** le boîtier extérieur présente un axe central axial (66) et que les ouvertures d'évacuation (50) de la première chambre de combustion (30) sont disposées par au moins un facteur 2 plus proche de l'axe central (66) que celles de la seconde chambre de combustion (36).

15. Générateur de gaz selon l'une quelconque des revendications précédentes, **caractérisé en ce que** le boîtier extérieur présente un axe central axial (66) et la première chambre de combustion (30) est disposée symétriquement par rapport à l'axe central (66).

16. Générateur de gaz selon l'une quelconque des revendications 1 à 14, **caractérisé en ce que** le boîtier extérieur présente un axe central axial (66) et la première chambre de combustion (30) est disposée excentrée par rapport à l'axe central (66).

17. Générateur de gaz selon l'une quelconque des revendications précédentes, **caractérisé en ce que** le couvercle (20, 20') a une forme de coupelle.

18. Générateur de gaz selon l'une quelconque des revendications précédentes, **caractérisé en ce que** la partie de boîtier munie de l'évidement (12; 12 ') présente une forme de coupelle et se prolonge dans l'évidement à l'intérieur de la coupelle.

19. Générateur de gaz selon l'une quelconque des discours précédentes, **caractérisé en ce qu'**un dispositif d'allumage (42') associé à la seconde chambre de combustion (36') est agencé dans une zone séparée (76) de la première chambre de combustion.

20. Générateur de gaz selon l'une quelconque des revendications précédentes, **caractérisé en ce que** la première chambre de combustion (30) est divisée en deux régions indépendantes (76), pour lequel chaque région (76) est munie de ses propres ouvertures d'évacuation (48', 82).

21. Générateur de gaz selon l'une quelconque des revendications précédentes, **caractérisé en ce que** toutes les ouvertures d'évacuation (50) de la première chambre de combustion (30) sont disposés sur le boitier extérieur du générateur de gaz, de façon à reposer sur un côté d'un premier plan (72) contenant l'axe central axial (66) du boîtier extérieur.

22. Générateur de gaz selon la revendication 21, **caractérisé en ce que** les ouvertures d'évacuation (50) dans le boîtier extérieur de la première chambre de combustion (30) sont situés dans un secteur qui, est compris entre un premier plan (72) et un autre second plan (74) contenant l'axe central axial (66), pour lequel le secteur présente de préférence un angle inférieur ou égal à 180 °, de préférence inférieure ou égal à 135 °, et en particulier inférieur ou égal à 90 °

23. Générateur de gaz selon la revendication 21 ou 22, **caractérisé en ce que** les ouvertures d'évacuation (16) de la seconde chambre de combustion (36) sont disposées dans un troisième plan (68) se trouvant principalement perpendiculaire à l'axe central axial (66), et de plus de préférence caractérisé parce que les ouvertures d'évacuation (50) de la première chambre de combustion (30) sont disposées sur un quatrième plan (64) parallèlement au troisième plan (68) contenant les ouvertures d'évacuation (16) de la deuxième chambre de combustion (36).

24. Générateur de gaz selon la revendication 23, **caractérisé en ce que** la distance entre les troisième et quatrième plans (68, 64) est supérieure à 7 mm, de préférence entre 7 et 25 mm, de préférence de 11 à 21 mm.

25. Module avec un générateur de gaz, un coussin gonflable dont le gonflage est assuré par un générateur de gaz (10) et un dispositif de fixation pour le montage du module, en particulier dans l'habitacle d'un véhicule, **caractérisé en ce que** le générateur de gaz (10) est réalisé selon au moins une des revendications 1 à 24.
